# EUROPÄISCHE PATENTANMELDUNG

(11) **EP 4 286 299 A1**
(43) Veröffentlichungstag der Anmeldung: **06.12.2023**
(21) Anmeldenummer: 22176970.6
(22) Anmeldetag: 02.06.2022
(51) Int. Cl.: B65G 1/00, G01B 11/24

(54) **VORRICHTUNG UND VERFAHREN ZUM KONTROLLIEREN EINER KONTUR EINER AUF EINEM FLURFÖRDERZEUG AUFGENOMMENEN LAST**

(71) Anmelder: Jungheinrich Aktiengesellschaft, 22047 Hamburg (DE)
(72) Erfinder: HOHMANN, Paul, 85368 Moosburg (DE); GREGUHN, Dennis, 85417 Marzling (DE); SEDLMEIER, Johannes, 85368 Hagsdorf (DE)
(74) Vertreter: Weickmann & Weickmann PartmbB

(57) **Zusammenfassung**

Die vorliegende Erfindung betrifft eine Vorrichtung (10) zum Kontrollieren einer Kontur einer auf einem Flurförderzeug (100) aufgenommenen Last (L), umfassend einen von dem Flurförderzeug (100) befahrbaren Untergrund (12), wenigstens zwei Sensoreinheiten (16a, 16b), wobei die Sensoreinheiten (16a, 16b) zur Aufnahme zweidimensionaler Daten eingerichtet und derart angeordnet sind, dass ein im Wesentlichen vertikal liegender Erfassungsbereich (14) aufgespannt ist, eine Steuereinrichtung (20), welche dazu eingerichtet ist, die relative Position des sich auf dem befahrbaren Untergrund (12) befindlichen Flurförderzeugs (100) bezüglich des Erfassungsbereichs (14) vorzugeben und/oder zu bestimmen; und wenigstens eine Auswerteeinheit (18), welche dazu eingerichtet ist, die von den Sensoreinheiten (16a, 16b) aufgenommenen Daten dahingehend auszuwerten, ob die in dem Erfassungsbereich (14) von dem Flurförderzeug (100) und/oder der von ihm getragenen Last (L) eingenommene Fläche unter Berücksichtigung der relativen Position eine vorbestimmte Bedingung erfüllt. Ferner betrifft die Erfindung ein durch eine derartige Vorrichtung (10) und wenigstens ein Flurförderzeug (100) gebildetes System sowie ein Verfahren zum Kontrollieren einer Kontur einer aus dem Flurförderzeug aufgenommenen Last in einem derartigen System

## Beschreibung

Die vorliegende Erfindung betrifft eine Vorrichtung zum Kontrollieren einer Kontur einer auf einem Flurförderzeug aufgenommenen Last, ein System zum Kontrollieren einer auf einem Flurförderzeug aufgenommenen Last und ein Verfahren zum Kontrollieren einer Kontur einer auf einem Flurförderzeug aufgenommenen Last in einem derartigen System.

Die vorliegende Erfindung beschäftigt sich mit der Thematik der Konturenkontrolle von auf Ladungsträgern angeordneten Waren, die innerhalb von Logistikumgebungen mit Hilfe von Flurförderzeugen befördert werden und hierbei Lasten im Sinne der vorliegenden Anmeldung bilden. Aufgrund der Tatsache, dass die Verarbeitung von Waren in derartigen Logistikeinrichtungen zunehmend automatisiert erfolgt, ist eine Überprüfung der Konturen der Waren auf ihrem Ladungsträger, also beispielsweise einer Palette oder ähnlichem, notwendig, um sicherzustellen, dass die Waren bei einer weiteren Handhabung mittels Flurförderzeugen oder Regalbediengeräten nicht über die Ladungsträgerkontur hinausstehen, oder anders ausgedrückt die von einem Flurförderzeug aufzunehmende Last hinsichtlich ihrer geometrischen Abmessungen in einem vorbestimmten Sollbereich liegt.

Sollte eine derartige Kontrolle unterbleiben und in der Tat ein Überstand von Waren über eine Ladungsträgerkontur vorliegen oder aus anderen Gründen eine Last eine vorgegebene Kontur nicht einhalten, so könnte dies zur Beschädigung der Waren oder von Anlagen in der Logistikeinrichtung oder auch zu Unfällen führen, beispielsweise Kollisionen mit Regalträgern oder anderen Waren bei ihrer Einlagerung, wobei es ferner auch zum Absturz von Waren oder Warenteilen kommen könnte.

Es ist in diesem Zusammenhang aus dem Stand der Technik bekannt, die Konturen von Waren auf Ladungsträgern in Relation zu den Ladungsträgern mittels Vorrichtungen zu überprüfen, welche die entsprechenden Ladungsträger zu ihrer Kontrolle übernehmen. Dies kann beispielsweise stationär vor der Einlagerung in ein Regal im Rahmen einer Übergabe an ein Regalbediengerät in einer hierfür vorgesehenen Station erfolgen, wie es beispielsweise in der Anlage aus der EP 3 464 124 B1 durchgeführt wird.

Ebenfalls ist es bekannt, eine Überprüfung derartiger Konturen bei einem Transport auf einem Transportband mittels eines Lichtgitters vorzunehmen, wie dies beispielsweise in der US 8,564,791 beschrieben ist, auf welches Transportband der entsprechende Ladungsträger vor seiner Kontrolle aufgesetzt und dann auf diesem durch das Lichtgitter geführt wird.

Die beiden genannten Vorgehensweisen aus dem Stand der Technik verlangen jedoch wie angesprochen jeweils eine Übergabe der zu kontrollierenden Last an eine zu der Kontrolle vorgesehenen Vorrichtung, also beispielsweise eine Kontrollstation oder ein Transportband in der genannten Weise, was jeweils zeitaufwändig ist und zusätzliche Arbeitsschritte bei der Handhabung der entsprechenden Lasten erfordert. Es besteht somit dahingehend noch Verbesserungspotential bei der Kontrolle von Konturen von Lasten, dass eine entsprechende Kontrolle einer Kontur einer Last in einer Weise möglich gemacht werden sollte, welche keine zusätzlichen Handhabungsschritte verlangt, sondern in einer vorteilhaften Weise in bestehende Arbeitsschritte integriert werden kann und damit zeitsparend und mit geringem Personaleinsatz durchgeführt werden kann.

Zu diesem Zweck schlägt die vorliegende Erfindung eine Vorrichtung zum Kontrollieren einer Kontur einer auf einem Flurförderzeug aufgenommenen Last vor, welche einen von dem Flurförderzeug befahrbaren Untergrund und wenigstens zwei Sensoreinheiten umfasst, wobei die Sensoreinheiten zur Aufnahme zweidimensionaler Daten eingerichtet und derart angeordnet sind, dass ein im Wesentlichen vertikal liegender Erfassungsbereich aufgespannt ist, wobei die Vorrichtung ferner eine Steuereinrichtung, welche dazu eingerichtet ist, die relative Position des sich auf dem befahrbaren Untergrund befindlichen Flurförderzeugs bezüglich des Erfassungsbereichs vorzugeben und/oder zu bestimmen, und wenigstens eine Auswerteeinheit umfasst, welche dazu eingerichtet ist, die von den Sensoreinheiten aufgenommenen Daten dahingehend auszuwerten, ob die in dem Erfassungsbereich von dem Flurförderzeug und/oder der von ihm getragenen Last eingenommene Fläche unter Berücksichtigung der relativen Position eine vorbestimmte Bedingung erfüllt.

Somit wird durch die erfindungsgemäße Vorrichtung die Möglichkeit geschaffen, die Kontrolle einer Kontur einer Last, also insbesondere von auf einem Ladungsträger wie einer Palette aufgenommenen Waren, unmittelbar während ihres Transports mit einem Flurförderzeug durchzuführen. Hierbei ist die Kontrollvorrichtung eine stationäre Vorrichtung, durch die auf dem befahrbaren Untergrund von dem Flurförderzeug hindurchgefahren oder in die wenigstens hineingefahren werden kann und die folglich nicht am Fahrzeug selbst angeordnet ist und auch keine Übergabe an eine separate Station erfordert. Durch die Verwendung von Sensoreinheiten mit der Fähigkeit zur Aufnahme zweidimensionaler Daten in der erfindungsgemäßen Weise wird ferner eine schichtweise Überprüfung einer jeweiligen Schnittebene zu jedem Zeitpunkt des Kontrollvorgangs durchgeführt und sobald eine Verletzung der vorbestimmten Bedingung festgestellt wird, kann die zu kontrollierende Kontur als unerwünscht oder ungeeignet klassifiziert werden.

Der besondere Vorteil dieser Ausgestaltung einer Kontrollvorrichtung besteht darin, dass die Überprüfung der Kontur sehr zeitsparend während ihres Transports mit einem Flurförderzeug auch ohne die Verwendung einer stationären Kontrollstation oder eines Transportbands erfolgen kann.

Ferner ist in diesem Zusammenhang festzuhalten, dass die genannte vorbestimmte Bedingung in der Regel maximal erlaubte Abmessungen der Last in der momentan betrachteten Ebene betrifft, sodass beispielsweise Schutzfelder vorgegeben werden können, in welche die genannte Last nicht hineinragen darf. Die Auswertung solcher Schutzfelder kann beispielsweise in den Sensoreinheiten selbst stattfinden oder es können komplexere Datenverarbeitungsschritte unternommen werden, um von den Sensoreinheiten gelieferte Daten in dieser Hinsicht auszuwerten. Hierbei kann ein Verstoß der vorbestimmten Bedingung bzw. ein Eingriff in ein Schutzfeld unterschiedliche Prozesse in Gang setzen, beispielsweise kann das entsprechende Flurförderzeug zunächst einmal in einen sicheren Zustand versetzt werden und gegebenenfalls in einem vorbestimmten Bereich der Logistikanlage verfahren werden und/oder es kann eine manuelle Überprüfung der Last angefordert werden, vor welcher eine weitere Handhabung davon nicht zulässig ist. Alternativ könnte auch vorgesehen werden, dass die Last an einem entsprechenden Standort für eine weitere Überprüfung abgestellt wird.

Ferner sei an dieser Stelle erwähnt, dass wenngleich die wenigstens zwei Sensoreinheiten derart angeordnet sein können, dass ein einzelner im Wesentlichen vertikal liegender Erfassungsbereich von sämtlichen Sensoreinheiten gleichzeitig abgedeckt wird, sodass er in einer einzelnen Ebene liegt, andererseits jedoch ebenfalls denkbar ist, dass die Sensoreinheiten um einen bestimmten Betrag gegeneinander in eine Richtung senkrecht zu den jeweiligen Erfassungsbereichen, also insbesondere einer Fortbewegungsrichtung des Flurförderzeugs, auf dem befahrbaren Untergrund während eines Kontrollvorgangs, versetzt sein können. In einem solchen Fall wäre dann die relative Position des sich auf dem befahrbaren Untergrund befindlichen Flurförderzeugs bezüglich des Erfassungsbereichs jeweils pro Sensoreinheit zu betrachten, während bei einem in einer einzelnen Kontrollebene liegenden Erfassungsbereich die genannte relative Position lediglich einmal vorgegeben bzw. bestimmt werden müsste.

Ebenfalls sei an dieser Stelle darauf hingewiesen, dass sich das Vorgeben bzw. Bestimmen der relativen Position des sich auf dem befahrbaren Untergrund befindlichen Flurförderzeugs darauf bezieht, dass eine Durchfahrt des Flurförderzeugs entweder von der Steuereinrichtung vorgegeben werden kann, wobei das Flurförderzeug dann einen genauen Bewegungsablauf auf dem befahrbaren Untergrund mit einer hohen Positionspräzision durchzuführen hat, oder das Flurförderzeug mit einer niedrigeren Präzision den befahrbaren Untergrund in der Kontrollvorrichtung befährt und die präzise Position davon durch die Steuereinrichtung bestimmt wird, beispielsweise anhand von Sensordaten oder von dem Fahrzeug selbst gelieferten Positionsdaten.

Hinsichtlich der Ausgestaltung der Sensoreinheiten sind prinzipiell unterschiedliche Ansätze verfolgbar, solange zweidimensionale Daten zur Bestimmung einer Kontur mit einer ausreichenden Genauigkeit aufgenommen und entsprechend weiterverarbeitet werden können. Somit könnten akustische Sensoren und beispielsweise auch 3D-Kameras zu diesem Zweck eingesetzt werden, in einer bevorzugten Ausführungsform der vorliegenden Erfindung können die Sensoreinheiten jedoch insbesondere als Laserscanner ausgebildet sein, wobei derartige Laserscanner mit den genannten Eigenschaften und einer Eignung einschließlich ausreichender Präzision für eine erfindungsgemäße Vorrichtung relativ kostengünstig am Markt erhältlich und einfach in eine derartige Vorrichtung integrierbar sind.

Insbesondere in Ausführungsformen, in welchen die erfindungsgemäße Vorrichtung genau zwei Sensoreinheiten umfasst, können diese derart zueinander ausgerichtet sein, dass der Erfassungsbereich als ein Rechteck ausgebildet ist, indem sich die Sensoreinheiten in zwei einander gegenüberliegenden Ecken davon befinden. In einer solchen Ausgestaltung würde eine der beiden Sensoreinheiten die Kontur der Oberseite und einer vertikalen Seite der Last kontrollieren, während die andere Sensoreinheit die gegenüberliegende vertikale Seite und die Unterseite der Last kontrollieren würde. Demzufolge besteht ein weiterer Vorteil der vorliegenden Erfindung in derartigen Ausführungsformen darin, dass im Gegensatz zu Konturenkontrollvorrichtungen aus dem Stand der Technik, in welchen Ladungsträger auf einem Untergrund, beispielsweise einem Transportband, aufstehen, auch ein Bereich unterhalb des Ladungsträgers erfasst werden kann, wenn der Ladungsträger mittels eines Lastaufnahmemittels (bspw. Gabelzinken) des Flurförderzeugs in angehobenem Zustand durch den Erfassungsbereich hindurchtransportiert wird. Hierbei kann ferner im oben angesprochenen Fall eines relativen Versatzes der Sensoreinheiten bezüglich der Ebenen ihrer Erfassungsbereiche die Ausbildung davon als Rechteck im Sinne einer Projektion der einzelnen Erfassungsbereiche senkrecht zu ihrer Ausdehnungsebene verstanden werden.

Ferner kann die genannte Anordnung in zwei einander gegenüberliegenden Ecken eines Rechtecks auf Grundlage üblicher Abmessungen von Flurförderzeugen und von ihnen getragenen Lasten eine Anordnung von einer der beiden Sensoreinheiten in beispielsweise etwa 2m Höhe und der anderen Sensoreinheit knapp über dem befahrbaren Untergrund umfassen. Auf diese Weise wird ein Rechteck als Erfassungsbereich gebildet, in welchem eine Konturenkontrolle sämtlicher üblicherweise von Flurförderzeugen getragenen Lasten möglich sein sollte.

Des Weiteren können in der vorliegenden Erfindung die wenigstens eine Auswerteeinheit oder wenigstens eine der Sensoreinheiten dazu eingerichtet sein, eine Segmentierung des Erfassungsbereichs in vertikaler Richtung vorzunehmen, um eine Einteilung der von dem Flurförderzeug aufgenommenen Last bezüglich ihrer Höhe in einen von wenigstens zwei Wertebereichen vorzunehmen. Auf diese Weise können Lasten hinsichtlich ihrer Höhe unterschieden werden und beispielsweise dahingehend eingeteilt werden, ob sie eine vorbestimmte erste Höhe überschreiten oder unterschreiten, oder ob sie in einen von drei vorbestimmten Höhenbereichen fallen. Durch diese Klassifizierung der Lasten in unterschiedliche Höhen können ihnen beispielsweise unterschiedliche Lagerplätze in einer Logistikeinrichtung zugewiesen werden, wodurch eine weitere Einsparung von Handhabungszeit der einzelnen Lasten durch die erfindungsgemäße Vorrichtung erzielt werden kann.

Wenngleich, wie oben bereits angesprochen, eine Auswertung der von den Sensoreinheiten aufgenommenen Daten hinsichtlich der vorbestimmten Bedingungen auch unmittelbar bei den Sensoreinheiten selbst vorgesehen sein kann, insbesondere bei einer einfachen Überprüfung von Schutzfeldern, was einer Integration von Auswerteeinrichtungen in den Sensoreinheiten entspricht, so können in einer anderen Ausführungsform die Steuereinrichtung und die Auswerteeinrichtung durch eine gemeinsame Datenverarbeitungseinheit gebildet sein, welche entsprechend von den wenigstens zwei Sensoreinheiten aufgenommene Sensordaten erhält, um diese weiter zu verarbeiten.

Zudem kann die erfindungsgemäße Vorrichtung eine weitere Sensoreinheit umfassen, welche dazu eingerichtet ist, eine Geschwindigkeit des den Untergrund befahrenden Flurförderzeugs zu erfassen, und welche betriebsmäßig mit der Steuereinrichtung und/oder der Auswerteeinrichtung gekoppelt ist, beispielsweise um gemäß der Fortbewegungsrichtung des Flurförderzeugs stets präzise Informationen über dessen momentane Position vorliegen zu haben, was zu einer verbesserten Überprüfung der vorderen und hinteren vertikalen Seite der Last beitragen kann.

Weiterhin betrifft die vorliegende Erfindung ein System zum Kontrollieren einer auf einem Flurförderzeug aufgenommenen Last, umfassend eine Kontrollvorrichtung der eben beschriebenen Art und wenigstens ein Flurförderzeug, welches dazu eingerichtet ist, auf einem Lastaufnahmemittel eine Last vorzugsweise in einer höhenverlagerbaren Weise zu tragen.

Wenngleich die vorliegende Erfindung selbstverständlich mit jeder Art von Flurförderzeug umsetzbar ist, also beispielsweise auch einem manuell oder halbautomatisch bedienten Flurförderzeug, so kann insbesondere an die Verwendung von autonom geführten Flurförderzeugen (auch als AGV - Automatic Guided Vehicles, Autonomous Mobile Robots oder FTF - Fahrerlose Transportfahrzeuge bezeichnet) gedacht werden. Derartige autonom geführte Flurförderzeuge erhalten von einer Leitstelle Anweisungen zu ihrer Bewegung und zum Handhaben von Lasten und führen diese Bewegungen und Handhabungsaufgaben dann in einer autonomen Weise in einem Logistikumfeld durch. Hierbei kann durch Verwendung eines automatisierten Fahrbetriebs bei der Durchfahrt durch den Erfassungsbereich eine höhere Präzision und Positionstreue erreicht werden als bei einer manuellen Durchfahrt, wodurch wiederum die Präzision der Konturenkontrolle erhöht werden kann. Dieser automatisierte Fahrbetrieb kann insbesondere durch die Verwendung von automatisch geführten Fahrzeugen oder AGVs erreicht werden oder auch durch ein Assistenzsystem, welches in anderen Typen von Flurförderzeugen diese zumindest im Bereich der Konturenkontrolle automatisiert steuert.

Hierbei versteht sich, dass das erfindungsgemäße System dazu geeignet sein kann, eine ganze Flotte derartiger Flurförderzeuge zu umfassen, die jeweils zu unterschiedlichen Zeitpunkten den befahrbaren Untergrund der Kontrollvorrichtung in einer vorgesehenen Weise befahren, damit die von ihnen getragene Last hinsichtlich ihrer Kontur kontrolliert werden kann. Hierbei bietet sich an, die Kontrollvorrichtung des Systems bei einer Zufahrt zu einem Lagerbereich einer Logistikeinrichtung anzuordnen, beispielsweise nachdem die entsprechenden Flurförderzeuge beladen worden sind, jedoch bevor sie in den Lagerbereich einfahren, um bei der weiteren Handhabung der Lasten innerhalb des Lagerbereichs sicher sein zu können, dass die zu handhabenden Lasten hinsichtlich ihrer Konturen die vorgegebenen Bedingungen erfüllen und keine Unfälle aufgrund unregelmäßiger oder fehlerhafter Lasten auftreten können.

Hierbei können in einem erfindungsgemäßen System die Kontrollvorrichtung und das Flurförderzeug jeweilige Kommunikationseinheiten umfassen, um eine Kommunikation zwischen den beiden zu ermöglichen, beispielsweise damit das Flurförderzeug die Kontrollvorrichtung über eine bevorstehende Einfahrt auf dem befahrbaren Untergrund in Kenntnis setzen kann oder damit die Kontrollvorrichtung auf Grundlage von Sensordaten das Flurförderzeug hinsichtlich seiner Route oder Position zu einer Korrektur anweisen kann. Die genannte Kommunikation mittels der beiden Kommunikationseinheiten kann hierbei direkt oder indirekt vorgesehen sein, d.h. die Kontrollvorrichtung und das Flurförderzeug können entweder unmittelbar miteinander kommunizieren oder die Kommunikation kann über eine externe Instanz abgewickelt werden, wie beispielsweise ein Leitsystem der selbstfahrenden Fahrzeuge.

Ein solches Leitsystem kann ferner ebenfalls in dem erfindungsgemäßen System umfasst sein und dazu eingerichtet sein, dem wenigstens einem Flurförderzeug Arbeitsanweisungen zu übermitteln, wobei das Leitsystem mit dem wenigstens einen Flurförderzeug und ggf. ebenfalls der Kontrollvorrichtung in Kommunikationsverbindung stehen kann.

Ferner kann das wenigstens eine Flurförderzeug dazu eingerichtet sein, seine absolute oder relative Position mittels einer Position-Sensoreinheit zu bestimmen und an die Kontrollvorrichtung zu übermitteln. Die derart ermittelte Position kann im Vorgang des Kontrollierens der Kontur der auf dem Flurförderzeug aufgenommenen Last verwendet werden, wobei üblicherweise derartige Position-Sensoreinheiten entweder optisch über in der Logistikeinrichtung vorgesehene Markierungen oder beispielsweise auch induktiv über in den befahrbaren Untergrund vorgesehenen Induktionselemente arbeiten.

Zuletzt betrifft die vorliegende Erfindung ein Verfahren zum Kontrollieren einer Kontur einer auf einem Flurförderzeug aufgenommenen Last in einem System der eben beschriebenen Art, umfassend ein Durchfahren des Erfassungsbereichs der Kontrollvorrichtung durch das Flurförderzeug auf dem befahrbaren Untergrund.

Wie bereits oben mehrfach angesprochen, ist hierzu notwendig, die aktuelle Position des Flurförderzeugs bzw. der aufgenommenen Last relativ zu dem Erfassungsbereich genau zu kennen, damit die Konturen mit der gewünschten Präzision kontrolliert werden können, wobei entweder ein Durchfahren des Erfassungsbereichs mit einer präzise vorgegebenen Position und Ausrichtung stattfindet oder eine präzise bestimmte Position des Fahrzeugs in der Kontrolle berücksichtigt wird.

Hierbei kann das erfindungsgemäße Verfahren ferner ein Verlagern des Lastaufnahmemittels des Flurförderzeugs auf eine vorbestimmte Höhe der Hubeinrichtung, also beispielsweise den Hub eines Gabelträgers eines Gabelstgaplers, umfassen, wodurch sichergestellt werden kann, dass in Höhenrichtung über dem befahrbaren Untergrund ein vorgegebener Referenz-Nullpunkt präzise eingehalten werden kann.

Bei der Durchführung des erfindungsgemäßen Verfahrens ist einerseits selbstverständlich eine möglichst hohe Durchfahrtgeschwindigkeit des Flurförderzeug wünschenswert, da hierdurch Zeit eingespart werden kann, andererseits würde jedoch bei einer zu hohen Durchfahrtgeschwindigkeit die Präzision der für die Kontrolle notwendigen Messungen leiden. Somit hat es sich gezeigt, dass das Durchfahren des Erfassungsbereichs durch das Flurförderzeug insbesondere bei einer Geschwindigkeit in einem Bereich von 50 bis 200 mm/s durchgeführt werden kann, weiter vorzugsweise bei etwa 125 mm/s. Eine derartige Geschwindigkeit stellt einen optimalen Kompromiss zwischen einem effizienten Durchführen der Kontrolle und einer möglichst hohen Präzision davon dar.

Weiterhin kann das erfindungsgemäße Verfahren wenigstens einen der folgenden Schritte umfassen:
- ein Bestimmen einer Position der Last bezüglich des Lastaufnahmemittels;
- ein Überprüfen des Erfassungsbereichs auf ein Vorliegen von Fremdgegenständen vor und/oder nach dem Durchfahren davon durch das Flurförderzeug; und/oder
- ein zeitweiliges Stoppen des Durchfahrens des Erfassungsbereichs durch das Flurförderzeug, um eine Frontkontur und/oder eine Heckkontur der Last zu kontrollieren.

Da das erfindungsgemäße Verfahren durch die Definition des Erfassungsbereichs in einer Ebene stets ein Schnittbild dieser Ebene liefert, kann zum Überprüfen der Kontur im vorderen bzw. hinteren Bereich der Last in Durchfahrrichtung durch die Vorrichtung unmittelbar vor und/oder nach dem Eintreten der Last in die Ebene des Erfassungsbereichs des Flurförderzeugs gestoppt werden, sodass an dieser Stelle sichergestellt werden kann, dass die Last auch in die beiden genannten Richtungen nicht in einen vordefinierten Schutzbereich übersteht. Hierbei kann zu diesen Zeitpunkten eine derartige Anpassung des Schutzbereichs vorgenommen werden, dass sich dieser lediglich noch auf in dem Erfassungsbereich zu erwartende Komponenten des Flurförderzeugs bezieht, beispielsweise das entsprechende Lastaufnahmemittel, also insbesondere zu diesem Zweck verwendete Gabelzinken, Gabelrücken oder ähnliches.

Um die Präzision dieser Bestimmung zu erhöhen, kann ferner die bereits angesprochene Bestimmung der Position der Last bezüglich des Lastaufnahmemittels durchgeführt werden, beispielsweise anhand von an dem Flurförderzeug selbst angeordneter Sensoren, welche eine Trageposition der Last beispielsweise mittels optischer Messungen oder anderer dafür geeigneter Messverfahren bestimmen können.

Durch das Überprüfen des Erfassungsbereichs auf ein Vorliegen von Fremdgegenständen vor und/oder nach dem Durchfahren davon durch das Flurförderzeug können ferner einerseits Unfälle vermieden werden und zum anderen sichergestellt werden, dass die Kontrolle der Kontur der Last auf dem Flurförderzeug keine durch eine Störung hervorgerufenen falschen Ergebnisse liefert.

Da ferner unterschiedliche Arten von Flurförderzeugen und/oder unterschiedliche den Lasten zugehörige Ladungsträger mit jeweils unterschiedlichen Geometrien in dem erfindungsgemäßen Verfahren bzw. im erfindungsgemäßen System kontrolliert werden können, kann ferner ein Anpassen der vorbestimmten Bedingung anhand des Fahrzeugtyps des Flurförderzeugs und/oder eines der Last zugehörigen Ladungsträgers vorgesehen sein, um diesen unterschiedlichen Fahrzeug- oder Ladungsträger-Geometrien Rechnung tragen zu können.

Weitere Merkmale und Vorteile der vorliegenden Erfindung werden aus der nachfolgenden Beschreibung von Ausführungsformen davon noch deutlicher, wenn diese zusammen mit den beiliegenden Figuren betrachtet werden. Diese zeigen im Einzelnen:
- Fig. 1: schematische Ansichten zur Erläuterung des Prinzips einer Konturenkontrolle in einer erfindungsgemäßen Vorrichtung;
- Fig. 2: eine schematische Vorderansicht einer erfindungsgemäßen Vorrichtung;
- Fig. 3: schematische isometrische Ansichten der Vorrichtung aus Fig. 2 während eines Kontrollverfahrens;
- Fig. 4: schematische Ansichten zur Erläuterung einer vorderen Konturkontrolle;
- Fig. 5: eine schematische Ansicht zur Erläuterung einer Haupt-Konturenkontrolle;
- Fig. 6: schematische Ansichten zur Erläuterung einer hinteren Konturenkontrolle; und
- Fig. 7: ein Flussdiagramm zur Erläuterung eines erfindungsgemäßen Verfahrens.

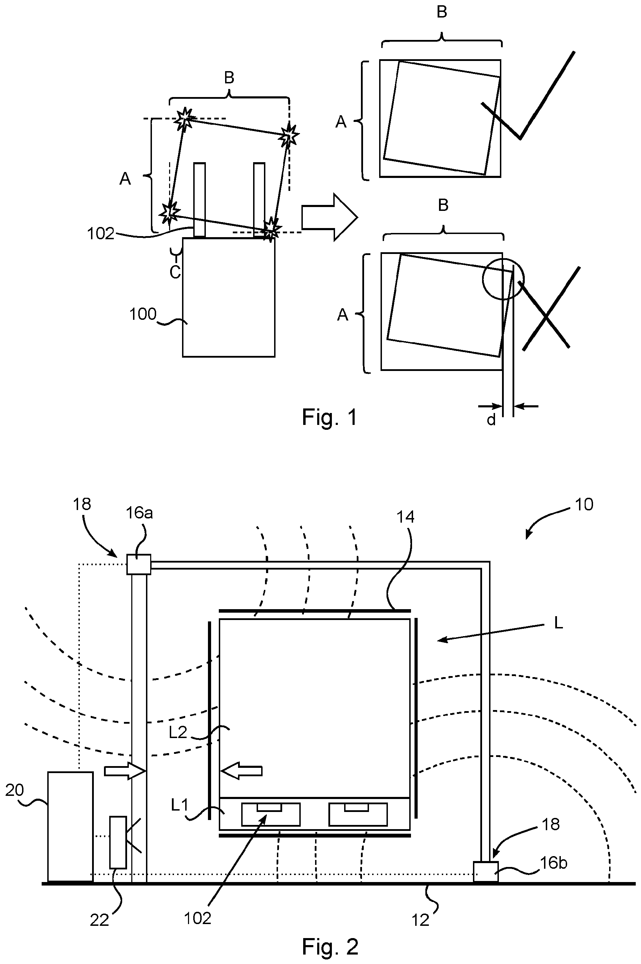

In Fig. 1 sind zunächst einmal schematische Draufsichten zur Erläuterung des Prinzips einer Konturenkontrolle in einer erfindungsgemäßen Vorrichtung dargestellt. Hierbei trägt ein Flurförderzeuge 100 auf seinem Lastaufnahmemittel 102, in diesem Fall einer für solche Zwecke üblichen Gabel, eine Last L, die insbesondere durch auf einem Ladungsträger, beispielsweise einer Palette, aufgenommene Waren gebildet ist.

Durch die Abmessungen A, B und C ist ferner ein Bereich definiert, welcher von der durch die Last L eingenommenen Fläche nicht überschritten werden darf, wodurch die vorbestimmte Bedingung im Sinne der vorliegenden Erfindung definiert ist. Während in der in Fig. 1 rechts oben dargestellten Ansicht die Kontur der Last L vollständig innerhalb des durch die Abmessungen A und B aufgespannten Bereichs liegt, überschreitet in der rechts unten dargestellten Ansicht die Kontur der Last L den Bereich um einen Überstand d, so dass in diesem Fall die vorbestimmte Bedingung verletzt ist und die Kontur der Last L für eine weitere Handhabung der Last L in einer entsprechenden Logistikeinrichtung nicht geeignet ist und entsprechende Gegenmaßnahmen getroffen werden müssen.

Hierbei versteht sich, dass eine entsprechende Kontrolle einer Kontur auch an einer Oberseite und ggf. einer Unterseite der Last stattfinden kann, sodass insgesamt eine dreidimensionale Überprüfung der Last L durchgeführt wird. Zu diesem Zweck wird erfindungsgemäß die Vorrichtung 10 aus Fig. 2 vorgeschlagen, die dazu eingerichtet ist, eine Abfolge von zweidimensionalen Kontrollen senkrecht zu einer Bewegungsrichtung des Flurförderzeugs 100 derart durchzuführen, dass letztlich eine dreidimensionale Kontrolle der Kontur der Last L erfolgt.

Wie in Fig. 2 zu erkennen ist, besteht die Last L in der gezeigten Konstellation aus einer auf dem Lastaufnahmemittel 102 des Flurförderzeugs 100 aufgenommenen Palette L1, auf der sich ein Gegenstand L2 befindet, so dass insbesondere die Ausrichtung bzw. Positionierung des Gegenstands L2 relativ zu der Palette L1 und die korrekte Aufnahme der Palette L1 auf dem Lastaufnahmemittel 102 überprüft werden können.

Zu diesem Zweck befährt das Flurförderzeug 100 einen befahrbaren Untergrund 12, welcher als ein Teil der Vorrichtung 10 im Sinne der vorliegenden Erfindung aufzufassen ist, in einer Richtung, welche im Wesentlichen senkrecht zu einem Erfassungsbereich 14 der Vorrichtung 10 liegt. Dieser Erfassungsbereich 14 wird durch zwei Sensoreinheiten 16a und 16b in Form von an sich bekannten und am Markt erhältlichen Laserscannern aufgespannt, welche zur Aufnahme zweidimensionaler Daten eingerichtet sind und einander derart gegenüberliegen, dass der Erfassungsbereich 14 im Wesentlichen die Form eines Rechtecks aufweist. Insbesondere ist unter Berücksichtigung der üblichen Abmessungen von Flurförderzeugen 100 sowie von ihnen getragenen Lasten L die erste Sensoreinheit 16a in einer Höhe von etwa 2m angeordnet, während die zweite Sensoreinheit 16b nur knapp über dem befahrbaren Untergrund 12 liegt.

In der gezeigten Ausführungsform sind die beiden Sensoreinheiten 16a und 16b wie bereits angesprochen jeweils als Laserscanner ausgeführt, welche eine zweidimensionale Punktewolke erzeugen können, welche über die Ermittlung von Abständen den Umriss von in ihrem jeweiligen Abtastbereich vorliegenden Gegenständen repräsentieren. Hierdurch können mittels dieser Sensoreinheiten 16a, 16b Schutzzonen oder Schutzfelder definiert werden, in welche gemäß des anhand von Fig. 1 erläuterten Prinzips die Last L nicht hineinragen kann, ohne die vorbestimmte Bedingung zu verletzen.

Insbesondere kontrolliert somit in der in Fig. 2 gezeigten Ausführungsform die erste Sensoreinheit 16a die obere und die linke Seite der Last, während die zweite Sensoreinheit 16b die rechte und die untere Seite der Last kontrolliert. Dementsprechend wirken in der gezeigten Ausführungsform die beiden Sensoreinheiten 16a, 16b jeweils auch unmittelbar als Auswerteeinheit 18, da sie bei einer Verletzung eines jeweiligen Schutzfeldes umgehend eine entsprechende Warnung oder ähnliches ausgeben können und somit die Überprüfung der vorbestimmten Bedingung direkt bei den Sensoreinheiten 16a, 16b stattfindet. Die in Fig. 2 ebenfalls gezeigte Steuereinrichtung 20 dient in der hier dargestellten Ausführungsform demzufolge lediglich zur Vorgabe bzw. Bestimmung einer relativen Position des Flurförderzeugs 100 bezüglich des Erfassungsbereichs 14, wozu ferner eine Position-Sensoreinheit 22 vorgesehen ist, welche entsprechende Daten zur Lokalisierung des Flurförderzeugs 100 liefert und betriebsmäßig mit der Steuereinrichtung 20 gekoppelt ist. Anhand dieser Lokalisierung kann eine Anpassung der Schutzfelder der Sensoreinheiten 16a, 16b vorgenommen werden, wobei zu diesem Zweck ebenfalls Datenverbindungen zwischen der Steuereinrichtung 20 und den Sensoreinheiten 16a, 16b vorgesehen sind.

Es sei an dieser Stelle angemerkt, dass in alternativen Ausführungsformen beispielsweise ebenfalls vorgesehen sein kann, dass das Flurförderzeug 100 selbst Daten an die Steuereinrichtung liefert, die die eigene Position in der Umgebung bzw. relativ zu dem Erfassungsbereich 14 repräsentieren und/oder dass eine Integration der Steuereinrichtung 20 und der Auswerteeinrichtung 18 vorgenommen wird, so dass die entsprechenden Sensoreinheiten 16a, 16b zunächst einmal lediglich Rohdaten in Form von Punktewolken liefern, die dann bei der Steuereinrichtung 20 auf die vorbestimmte Bedingung hin untersucht werden, die demzufolge ebenfalls die Aufgabe der Auswerteeinheit 18 übernimmt. Ferner kann ebenfalls eine Ankopplung an oder eine Integration mit einem Leitsystem vorgesehen sein, welches wiederum mit dem Flurförderzeug 100 und/oder der Steuereinheit 20 in Verbindung steht, um den jeweiligen Betrieb der genannten Vorrichtungen zu koordinieren, so dass das Flurförderzeug 100 einer vorgegebenen Bahn folgt und sich zu vorbestimmten Zeitpunkten in vorbestimmten Positionen relativ zu der Kontrollvorrichtung 10 befindet und so die Einstellung der Schutzfelder entsprechend der aktuellen Position des Flurförderzeugs 100 bzw. der durch das Flurförderzeug 100 aufgenommenen Last L erfolgen kann.

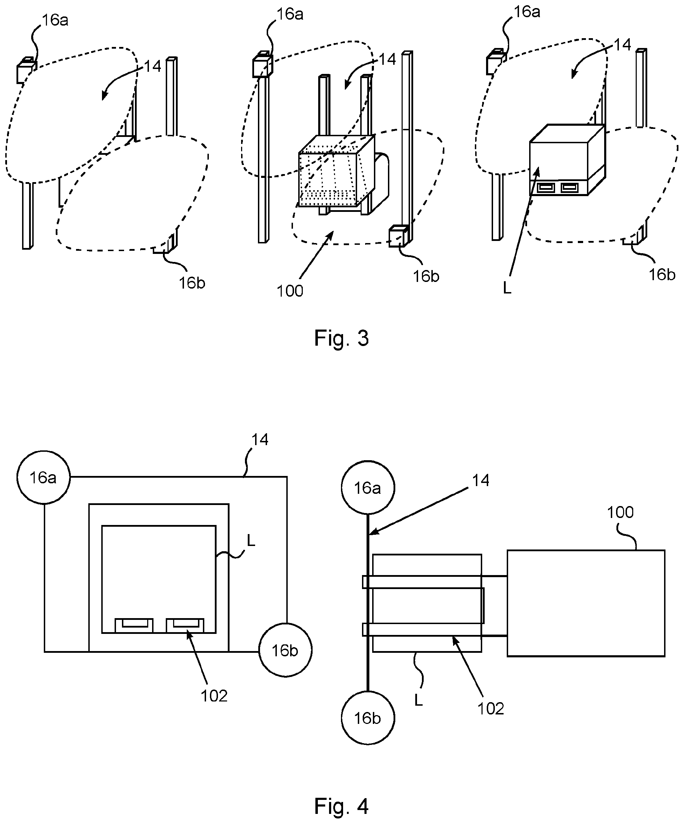

Eine Durchfahrt des Flurförderzeugs 100 durch die Vorrichtung 10 ist nun anhand Fig. 3 erläutert, wobei in der linken Darstellung die Last L noch nicht in dem Erfassungsbereich vorliegt, in der mittleren Darstellung in dem Erfassungsbereich 14 vorliegt und in der rechten Darstellung den Erfassungsbereich 14 bereits wieder verlassen hat.

Die drei in Fig. 3 dargestellten Konstellationen sind nun anhand der weiteren Fig. 4 bis 6 in Vorderansicht und teilweise in Draufsicht erläutert, wobei in Fig. 4 zunächst einmal die Last L noch nicht in den Erfassungsbereich 14 eingetreten ist, welcher in der in Fig. 4 rechts dargestellten Draufsicht als Linienprojektion der entsprechenden Ebene zu sehen ist. Hierbei kann durch entsprechende Erfassung durch die beiden Sensoreinheiten 16a, 16b in diesem Zustand bei ausreichend präziser Kenntnis der Position des Flurförderzeugs 100 bezüglich der Vorrichtung 10 und insbesondere des Erfassungsbereichs 14 sowie der Position der Palette L1 auf dem Lastaufnahmemittel 102, welche jeweils beispielsweise durch geeignete optische Sensoren ermittelt werden können, die vordere Kontur der Last L kontrolliert werden. Zu diesem Zweck kann beispielsweise zu diesem Zeitpunkt ein Schutzfeld der Sensoreinheiten 16a, 16b derart angepasst werden, dass es lediglich noch die Lastaufnahmemittel 102 selbst ausnimmt und jeder Überstand der Last L in den Erfassungsbereich 14 zu einer Verletzung des Schutzfelds führt.

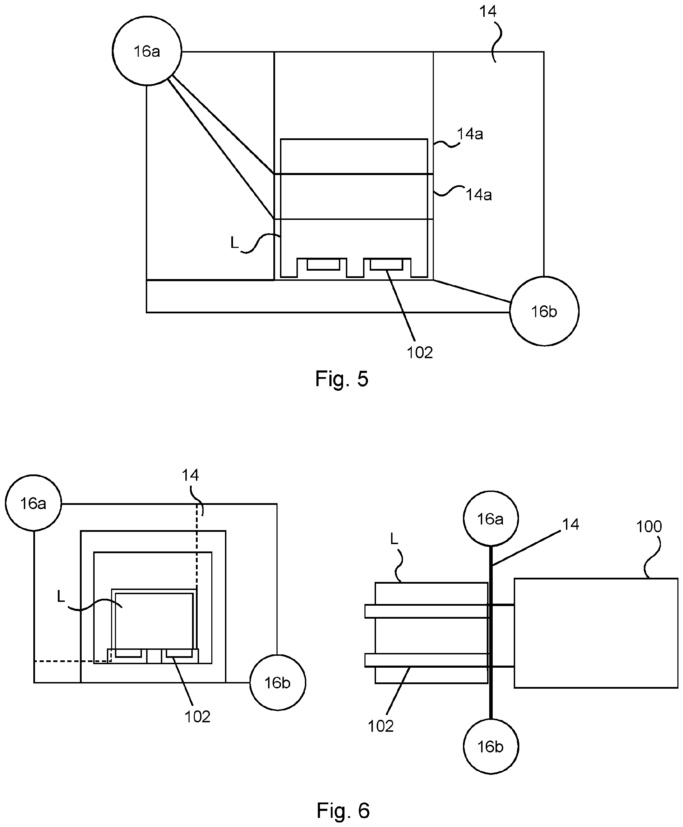

In ähnlicher Weise wird in der in Fig. 6 dargestellten Konstellation die hintere Kontur der Last L kontrolliert, wobei das Schutzfeld derart angepasst werden kann, dass die an der in Fig. 5 im Bereich des Erfassungsbereich 14 liegenden Komponenten des Flurförderzeugs 100 ausgenommen sind, also in der gezeigten Ausführungsform der Vorbau des Lastaufnahmemittels 102 bzw. Gabelrücken mit seiner bekannten Geometrie.

Demhingegen ist in Fig. 5 der mittlere der Zustände aus Fig. 3 veranschaulicht, in welchem die Last L selbst in dem Erfassungsbereich 14 vorliegt und ihre seitliche sowie obere und untere Kontur an dieser Stelle in Fortbewegungsrichtung des Flurförderzeugs 100 kontrolliert werden kann. Hierbei ist insbesondere in Höhenrichtung eine Unterteilung des Erfassungsbereich 14 in zwei Unterbereiche 14a und 14b vorgenommen, wobei für jeden der Unterbereiche 14a und 14b ein Vorliegen der Last L darin überprüft wird, um eine Klassifizierung der Last L in eine Höhenkategorie vornehmen zu können.

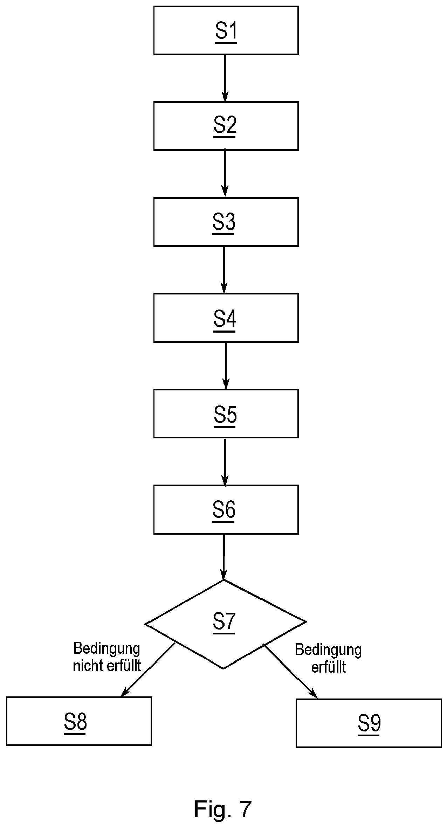

Zuletzt ist in Fig. 7 ein Flussdiagramm gezeigt, welches den Ablauf eines erfindungsgemäßen Verfahrens in einem aus einer Vorrichtung 10 und einem Flurförderzeug 100 gemäß den zuvor beschriebenen Ausführungsformen gebildeten System veranschaulicht. Hierzu übermittelt zunächst einmal in Schritt S1 das mit einer Last L beladene Flurförderzeug 100 an die Vorrichtung 10 mittels jeweiliger Kommunikationsvorrichtungen der beiden Informationen über eine bevorstehende Durchfahrt sowie über seinen Fahrzeugtyp und die Position der Last L auf seinem Lastaufnahmemittel 102. Aus diesen Informationen bestimmt die Vorrichtung 10 in Schritt S2 in ihrer hierzu eingerichteten Steuereinheit 20 Schutzfelder der Sensoreinheiten 16a, 16b welche auf die Geometrie des Flurförderzeugs 100 und die bekannten Eigenschaften der Last L hinsichtlich ihrer relativen Position abgestimmt sind.

Alternativ kann die Kommunikation zwischen dem Flurförderzeug 100 und der Kontrollvorrichtung 10 auch durch eine übergeordnete Steuereinheit vermittelt werden und diese insbesondere das Flurförderzeug 100 anweisen, in die Kontrollvorrichtung 10 einzufahren, sowie der Kontrollvorrichtung 10 Informationen über die aktuelle Position und den Betriebszustand (Geschwindigkeit, Hubhöhe des Ladungsträgers) sowie sonstige Eigenschaften wie Abmessungen des Fahrzeugs 100, Abmessungen und Position der Lastgabeln und des Gabelrückens am Fahrzeug sowie Abmessungen des Ladungsträgers übermitteln. Weiter alternativ kann die übergeordnete Steuereinheit auch direkt die Abmessungen der einzustellenden Schutzfelder übermitteln, die beispielsweise in einer Datenbank der übergeordneten Steuereinheit vorliegen können. Die übergeordnete Steuereinheit kann dem Flurförderzeug 100 einen geeigneten Kurs und eine geeignete Geschwindigkeit vorgeben und veranlassen, dass das Flurförderzeug 100 zur Überprüfung der vorderen und hinteren Kontur der Last L an den richtigen Positionen stoppt.

Die Überprüfung einer vorgegebenen maximalen Länge der Last L bzw. des Ladungsträgers in Fahrtrichtung ergibt sich hierbei aus einer möglichen Verletzung der Schutzfelder bei Überprüfung der vorderen und hinteren Kontur sowie der jeweiligen Position des Flurförderzeugs 100 bzw. der durch das Flurförderzeug 100 zurückgelegten Wegstrecke / gefahrenen Geschwindigkeit zwischen den beiden Stopppositionen.

In Schritt S3 beginnt nun das Flurförderzeug seine Durchfahrt durch die Vorrichtung 10 auf dem befahrbaren Untergrund 12, wobei fortlaufend die genaue Position des Flurförderzeugs 100 mittels geeigneter Sensoren ermittelt und der Vorrichtung 10 zur Verfügung gestellt wird.

Sobald die in Fig. 4 gezeigte Position des Flurförderzeugs 100 gezeigte Position bezüglich des Erfassungsbereichs 14 erreicht worden ist, stoppt das Flurförderzeug kurz, um in Schritt S4 in der oben beschriebenen Weise die Kontrolle der vorderen Kontur der Last L vorzunehmen. Anschließend durchfährt in Schritt S5 das Flurförderzeug 100 den Erfassungsbereich 14, sodass in der anhand von Fig. 5 erläuterten Weise die seitlichen sowie oberen und unteren Konturen der Last L kontrolliert werden können.

Sobald die in Fig. 6 gezeigte Position erreicht ist, stoppt das Flurförderzeug 100 erneut und in der anhand von Fig. 6 erläuterten Weise wird in Schritt S6 die hintere Kontur der Last L kontrolliert. Hierbei findet zwischen den Schritten S4, S5 und S6 jeweils eine Anpassung der Schutzfelder der Sensoreinheiten 16a und 16b statt, um die einzelnen Abschnitt der Last L in geeigneter Art und Weise überprüfen zu können.

Zuletzt wird in Schritt S7 von einer Auswerteeinheit entschieden, ob eine Verletzung eines der Schutzfelder in einem der Schritte S4 bis S6 vorgelegen hat und somit eine vorbestimmte Bedingung im Sinne der vorliegenden Anmeldung nicht erfüllt worden ist. Selbstverständlich könnte bei einer Verletzung eines Schutzfeldes in einem der Schritte S4 bis S6 auch unmittelbar ein Abbruch des Verfahrens angewiesen werden, so dass der Schritt S7 nicht notwendigerweise zeitlich nach allen der Schritt S4 bis S6 stattfinden muss.

Sofern eine derartige Verletzung jedoch der Fall ist, d.h. die vorbestimmte Bedingung nicht durchgehend erfüllt ist, wird eine Warnung ausgegeben und/oder das Flurförderzeug wird in einen entsprechende Zustand versetzt, sodass in Schritt S8 eine manuelle Überprüfung der Last oder ähnliches durchgeführt werden kann. Sollte dem hingegen die Kontur der Last L die vorbestimmte Bedingung vollständig erfüllen, d.h. keines der Schutzfelder in den Schritten S4 bis S6 verletzt haben, so dann das Flurförderzeug in Schritt S9 aus der Vorrichtung 10 ausfahren und seinen Betrieb in der vorgesehenen Weise fortsetzen.

## Patentansprüche

1. Vorrichtung (10) zum Kontrollieren einer Kontur einer auf einem Flurförderzeug (100) aufgenommenen Last (L), umfassend:
- einen von dem Flurförderzeug (100) befahrbaren Untergrund (12);
- wenigstens zwei Sensoreinheiten (16a, 16b),
wobei die Sensoreinheiten (16a, 16b) zur Aufnahme zweidimensionaler Daten eingerichtet und derart angeordnet sind, dass ein im Wesentlichen vertikal liegender Erfassungsbereich (14) aufgespannt ist,
- eine Steuereinrichtung (20), welche dazu eingerichtet ist, die relative Position des sich auf dem befahrbaren Untergrund (12) befindlichen Flurförderzeugs (100) bezüglich des Erfassungsbereichs (14) vorzugeben und/oder zu bestimmen; und
- wenigstens eine Auswerteeinheit (18), welche dazu eingerichtet ist, die von den Sensoreinheiten (16a, 16b) aufgenommenen Daten dahingehend auszuwerten, ob die in dem Erfassungsbereich (14) von dem Flurförderzeug (100) und/oder der von ihm getragenen Last (L) eingenommene Fläche unter Berücksichtigung der relativen Position eine vorbestimmte Bedingung erfüllt.

2. Vorrichtung (10) nach Anspruch 1,
wobei die Sensoreinheiten (16a, 16b) als Laserscanner ausgebildet sind.

3. Vorrichtung (10) nach Anspruch 1 oder 2,
wobei zwei der Sensoreinheiten (16a, 16b) derart zueinander ausgerichtet sind, dass der Erfassungsbereich (14) als ein Rechteck ausgebildet ist, indem sich die Sensoreinheiten (16a, 16b) in zwei einander gegenüberliegenden Ecken davon befinden.

4. Vorrichtung (10) nach einem der vorhergehenden Ansprüche,
wobei die wenigstens eine Auswerteeinheit (18) oder wenigstens eine der Sensoreinheiten (16a, 16b) dazu eingerichtet ist, eine Segmentierung des Erfassungsbereichs (14) in vertikaler Richtung vorzunehmen, um eine Einteilung der von dem Flurförderzeug (100) aufgenommenen Last (L) bezüglich ihrer Höhe in einen von wenigstens zwei Wertebereichen vorzunehmen.

5. Vorrichtung (10) nach einem der vorhergehenden Ansprüche,
wobei die Steuereinrichtung (20) und die Auswerteeinrichtung (18) durch eine gemeinsame Datenverarbeitungseinheit gebildet sind.

6. Vorrichtung (10) nach einem der vorhergehenden Ansprüche,
ferner umfassend eine weitere Sensoreinheit, welche dazu eingerichtet ist, eine Geschwindigkeit des den Untergrund (12) befahrenden Flurförderzeugs (100) zu erfassen, und welche betriebsmäßig mit der Steuereinrichtung (20) und/oder der Auswerteeinheit (18) gekoppelt ist.

7. System zum Kontrollieren einer auf einem Flurförderzeug (100) aufgenommenen Last (L), umfassend:
- eine Kontrollvorrichtung (10) nach einem der vorhergehenden Ansprüche; und
- wenigstens ein Flurförderzeug (100), welches dazu eingerichtet ist, auf einem Lastaufnahmemittel (102) eine Last (L) vorzugsweise in einer höhenverlagerbaren Weise zu tragen.

8. System nach Anspruch 7,
wobei die Kontrollvorrichtung (10) und das Flurförderzeug (100) jeweilige Kommunikationseinheiten umfassen, um eine Kommunikation zwischen den beiden zu ermöglichen.

9. System nach Anspruch 7 oder 8,
ferner umfassend ein Leitsystem, welches dazu eingerichtet ist, dem wenigstens einen Flurförderzeug (100) Arbeitsanweisungen zu übermitteln, wobei das Leitsystem mit dem wenigstens einen Flurförderzeug (100) und ggf. der Kontrollvorrichtung (10) in Kommunikationsverbindung steht.

10. System nach einem der Ansprüche 7 bis 9,
wobei das wenigstens eine Flurförderzeug (100) dazu eingerichtet ist, seine absolute oder relative Position mittels einer Position-Sensoreinheit zu bestimmen und an die Kontrollvorrichtung (10) zu übermitteln.

11. Verfahren zum Kontrollieren einer Kontur einer auf einem Flurförderzeug (100) aufgenommenen Last (L) in einem System nach einem der Ansprüche 7 bis 10,
umfassend ein Durchfahren des Erfassungsbereichs (14) der Kontrollvorrichtung (10) durch das Flurförderzeug (100) auf dem befahrbaren Untergrund (12).

12. Verfahren nach Anspruch 11,
ferner umfassend ein Verlagern des Lastaufnahmemittels (102) des Flurförderzeugs (100) auf eine vorbestimmte Höhe.

13. Verfahren nach einem der Ansprüche 11 und 12,
wobei das Durchfahren des Erfassungsbereichs (14) durch das Flurförderzeug (100) bei einer Geschwindigkeit in einem Bereich von 50 bis 200 mm/s durchgeführt wird, vorzugsweise bei etwa 125 mm/s.

14. Verfahren nach einem der Ansprüche 11 bis 13,
ferner umfassend ein Bestimmen einer Position der Last (L) bezüglich des Lastaufnahmemittels (102); und/oder
ein Überprüfen des Erfassungsbereichs (14) auf ein Vorliegen von Fremdgegenständen vor und/oder nach dem Durchfahren davon durch das Flurförderzeug (100); und/oder
ein zeitweiliges Stoppen des Durchfahrens des Erfassungsbereichs (14) durch das Flurförderzeug (100), um eine Frontkontur und/oder eine Hecckontur der Last (L) zu kontrollieren.

15. Verfahren nach einem der Ansprüche 11 bis 14,
ferner umfassen ein Anpassen der vorbestimmten Bedingung anhand eines Fahrzeugtyps des Flurförderzeugs (100) und/oder eines der Last (L) zugehörigen Ladungsträgers (L1).
